# EUROPÄISCHE PATENTSCHRIFT

(11) **EP 1 295 373 B1**
(45) Veröffentlichungstag und Bekanntmachung des Hinweises auf die Patenterteilung: **09.04.2008**
(21) Anmeldenummer: 01984126.1
(22) Anmeldetag: 26.06.2001
(51) Int. Cl.: H02G 11/00

(54) **LEITUNGSFÜHRUNGSEINRICHTUNG**
LINE GUIDANCE DEVICE
DISPOSITIF DE GUIDAGE DE LIGNES

(30) Priorität: 30.06.2000 DE 10030985
(43) Veröffentlichungstag der Anmeldung: 26.03.2003
(73) Patentinhaber: igus GmbH, 51147 Köln (DE)
(72) Erfinder: Blase, Günter, 51429 Bergisch Gladbach (DE)
(74) Vertreter: Gudat, Axel
(86) Internationale Anmeldenummer: PCT/DE2001/002352
(87) Internationale Veröffentlichungsnummer: WO 2002/003521

(56) Entgegenhaltungen:
- EP-A- 0 789 167
- WO-A-00/41284

## Beschreibung

Die Erfindung betrifft eine Leitungsführungseinrichtung zum Führen von Leitungen oder Kabeln in einem Führungskanal mit einer Vielzahl von zueinander verschwenkbaren Führungsgliedern, die Seitenteile zur Einschränkung der Bewegung der geführten Leitung quer zu Leitungsführungseinrichtung aufweisen, wobei die Leitungsführungseinrichtung unter Bildung eines Untertrums, eines Umlenkbereichs und eines oberhalb des Untertrums geführten Obertrums ablegbar ist, und die Verschwenkachse der Führungsglieder zueinander jeweils außerhalb der halben Höhe der Führungsglieder in der dem jeweils gegenüberliegenden Trum zugewandten Hälfte der Führungsglieder angeordnet ist.

Derartige Leitungsführungseinrichtungen sind mit einem Ende an einer stationären Einrichtung verbindbar und stellen eine Alternative zu Energieführungsketten dar, deren Glieder um auf halber Höhe angeordnete Zapfenverbindungen verschwenkbar sind.

Leitungsführungseinrichtungen der oben genannten Art sind aus der EP 0 789 167 A und DE 198 60 948 A, welche als Stand der Technik im Sinne von Artikel 54(3) EPU angesehen wird, bekannt. Bei diesen Leitungsführungseinrichtungen werden die zur Fahrbewegung notwendigen Zugkräfte durch das Gleitband bzw. Führungsband auf die Führungsglieder übertragen. Das die Führungsglieder verbindende Band kann hierbei zur Führung des Untertrums auf dem Obertrum dienen, die Führungsglieder können auch aufeinander geführt werden. Bei schnellen Fahrbewegungen der Leitungsführungseinrichtung werden auf jeden Fall beträchtliche Zugkräfte auf das Gleitband ausgeübt, das zugleich eine geeignete Elastizität aufweisen muß, um die Abwinkelung benachbarter Führungsglieder zueinander zu ermöglichen. Die Beanspruchungen des Gleitbandes.können hierbei unter Umständen so hoch sein, dass das Gleitband aufgrund der einwirkenden Zug- und Biegekräfte ermüdet, was zu einer Beeinträchtigung der Funktion der Leitungsführungseinrichtung oder sogar bis zu einem Reißen des Gleitbandes führen kann. Ferner führt eine Längsdehnbarkeit des Gleit- oder Führungsbandes zu einer geringen axialen Beabstandung der Führungsglieder, wodurch bei Zugentlastung des Bandes eine entsprechende Geräuschentwicklung resultiert.

Der Erfindung liegt daher die Aufgabe zugrunde, eine gattungsgemäße Leitungsführungseinrichtung derart zu verbessern, dass diese eine erhöhte Lebensdauer und geringere Geräuschemission aufweist.

Die Aufgabe wird dadurch gelöst, dass bei einer Leitungsführungseinrichtung der eingangs genannten Art die Führungsglieder einen seitlich überlappenden Bereich mit einer Oberkante und einer Unterkante und zwei Vorsprünge aufweisen, die in im wesentlichen gestreckter Lage unmittelbar benachbarter Führungsglieder bei Zugentlastung als Zugkraft übertragende Mittel wirken, indem die Unterkante eines Führungsglieds auf den Vorsprung des benachbarten Führungsglieds aufgleitet und dabei der seitlich überlappende Bereich zwischen der Oberkante und der Unterkante unter Einschränkung einer relativen Höhenbewegung der Führungsglieder eine reversible Verkeilung zwischen den Vorsprüngen erfährt.

Dabei können die Ober- und Unterkante des überlappenden Bereichs und die Vorsprünge über einen bestimmten Verschwenkwinkel aus der gestreckten Lage der Führungsglieder hinaus als Zugkraft übertragende Mittel wirken, indem die reversible Klemmung zwischen den seitlich überlappenden Bereich und den Vorsprüngen über diesen Winkel erhalten bleibt.

Vorzugsweise wirken die Vorsprünge bei der Schwenkbewegung unmittelbar benachbarter Führungsglieder als Führungsmittel, indem die Formgebung von Ober- und Unterkante zwischen den beiden Vorsprüngen derart bemessen, dass zumindest über einen Teil der Verschwenkbewegung eine relative Höhenbewegung der Führungsglieder zueinander soweit eingeschränkt ist, wie sie für eine reibungsarme Schwenkbewegung der Führungsglieder noch notwendig ist.

Zweckmäßigerweise ist der seitliche überlappende Bereich der Führungsglieder als seitlich vorspringender Bereich gegenüber einem seitlich zurückspringenden Bereich ausgebildet, der von dem seitliche überlappenden Bereich des benachbarten Führungsglieds aufnehmbar ist und in dem die Vorsprünge seitlich vorstehen.

In einer bevorzugten Weiterbildung der Erfindung sind die Ober- und Unterkante des überlappenden Bereichs kreisbogenförmig in Richtung der Verschwenkbewegung des benachbarten Führungsglieds ausgebildet.

Insbesondere kann die Unterkante des überlappenden Bereichs durch eine kreissektorförmige Ausnehmung gebildet sein, in die der mit der Unterseite zusammenwirkende Vorsprung mit einer der Kreisbogenfläche der Unterkante entsprechenden Kreisbogenfläche eingreift.

Dabei kann das Zentrum der Kreisbogenfläche der Unterkante und das Zentrum der Kreisbogenfläche des Vorsprungs an der dem gegenüberliegenden Trum zugewandten Unterkante des Führungsglieds angeordnet sein.

Darüber hinaus kann das Zentrum der Kreisbogenfläche des Vorsprungs außerdem auf der Höhe der von der Ausnehmung abgewandten Stirnseite des Führungsglieds und somit im Eckpunkt der Unterseite und der Stirnseite des Führungsglieds angeordnet sein.

Um ein Lösen benachbarter Führungsglieder zur Demontage der Leitungsführungseinrichtung zu ermöglichen, sind die Ober- und Unterkante des überlappenden Bereichs und die Vorsprünge so ausgebildet, dass sie durch eine bestimmte relative Schwenk- und/oder translatorische Bewegung der Führungsglieder voneinander entfernbar sind. Durch umgekehrte Bewegung lassen sich die Führungsglieder zur Montage der Leitungsführungseinrichtung miteinander verbinden.

Bei einer besonders vorteilhaften Ausbildung werden benachbarte Führungsglieder um ihre gemeinsame Verschwenkachse in die maximale Verschwenkstellung positioniert und dann um den mit der Oberkante des überlappenden Bereichs zusammenwirkenden Vorsprung aus ihrem Eingriff heraus geschwenkt. Die umgekehrte Bewegung wird zum Verbinden benachbarter Führungsglieder durchgeführt.

Darüber hinaus kann noch ein letzter Widerstand zur vollständigen Lösung der Glieder zu überwinden sein, der beispielsweise als Montagehilfe oder zur Verhinderung eines Lösens der Glieder dienen kann, wobei dieser Widerstand manuell überwindbar ist. Gegebenenfalls können zusätzliche Manipulationen benachbarter Führungsglieder zueinander erforderlich sein, um diese voneinander zu lösen.

Zur Begrenzung des Verschwenkwinkels benachbarter Führungsglieder können zumindest zwei Anschlagpaare vorgesehen sein.

Zur Geräuschdämpfung beim Anschlag aus der Verschwenkstellung in die gestreckte Stellung benachbarter Führungsglieder sind die Anschlagpaare vorzugsweise so ausgebildet, dass zunächst ein zur Verschwenkachse näherliegendes Anschlagpaar und danach ein von der Verschwenkachse entfernter liegendes Anschlagpaar zur Anlage kommen.

Weiterhin können zur Abbremsung der Verschwenkbewegung in der einen oder anderen Richtung an der Oberkante des überlappenden Bereichs und/oder an dem mit der Unterkante zusammenwirkenden Vorsprung Auflaufschrägen und auf diese auflaufende Bereiche des mit der Oberkante des überlappenden Bereichs eines benachbarten Führungsglieds zusammenwirkenden Vorsprungs bzw. der Unterkante vorgesehen sein.

Die Auflaufschräge und/oder der auf einer Auflaufschräge auflaufende Bereich eines Führungsgliedes können jeweils an den Seitenteilen des Führungsgliedes vorgesehen sein. Unabhängig hiervon oder zusätzlich hierzu können die Auflaufschrägen bzw. Auflaufbereiche an vorgesehenen Führungsbereichen, ggf. auch unmittelbar an den zugkräfteaufnehmenden Mitteln, vorgesehen sein bzw. die zugkräfteaufnehmenden Mittel mit entsprechenden Auflaufschrägen bzw. Auflaufbereichen versehen sein.

In einer bevorzugten Weiterbildung der Erfindung ist ein eine Vielzahl von Führungsglieder miteinander verbindendes und sich in Längsrichtung der Leitungsführungseinrichtung erstreckendes Führungsband vorgesehen, an dem die Führungsglieder befestigt sind. Das Führungsband, das ohne die Zugkraft übertragende Mittel der vorliegenden Erfindung die Zugkräfte aufnehmen müsste, wird dadurch entlastet. Die Zugkraft übertragenden Mittel gemäß der Erfindung könnten so ausgelegt sein, dass sie erst ab einer bestimmten Höhe der Zugkräfte zur Wirkung kommen und bis zum Erreichen dieser Höhe die Zugkräfte im wesentlichen vom Führungsband aufgenommen werden. Das Führungsband kann zum Beispiel in Art einer undehnbaren Folie ausgeführt sein.

Vorzugsweise ist das Führungsband als Gleitband an den Führungsgliedern so angeordnet, dass die Unterkanten der Führungsglieder oberhalb der Unterkante des Gleitbandes oder bündig mit dieser abschließen, so dass bei Auflage des Obertrums der Leitungsführungseinrichtung auf dem Untertrum die jeweiligen Ober- bzw. Unterseiten des Gleitbandes miteinander zur Anlage kommen und bei der Fahrbewegung der Leitungsführungseinrichtung als Gleitbereiche fungieren. Das die Führungsglieder verbindende Führungsband kann auch innerhalb des durch die Führungsglieder gebildeten Führungskanals angeordnet sein.

Die Erfindung wird nachfolgend beispielhaft beschrieben und anhand eines Ausführungsbeispiels beispielhaft erläutert. Es zeigen:
- Fig. 1: eine gattungsgemäße Leitungsführungseinrichtung mit auf dem Gleitband befestigten Führungsgliedern,
- Fig. 2: ein Führungsglied der erfindungsgemäßen Leitungsführungseinrichtung in Seitenansicht,
- Fig. 3: ein Führungsglied nach Fig. 2 in frontaler Ansicht,
- Fig. 4: ein Führungsglied nach Fig. 2 in Draufsicht.

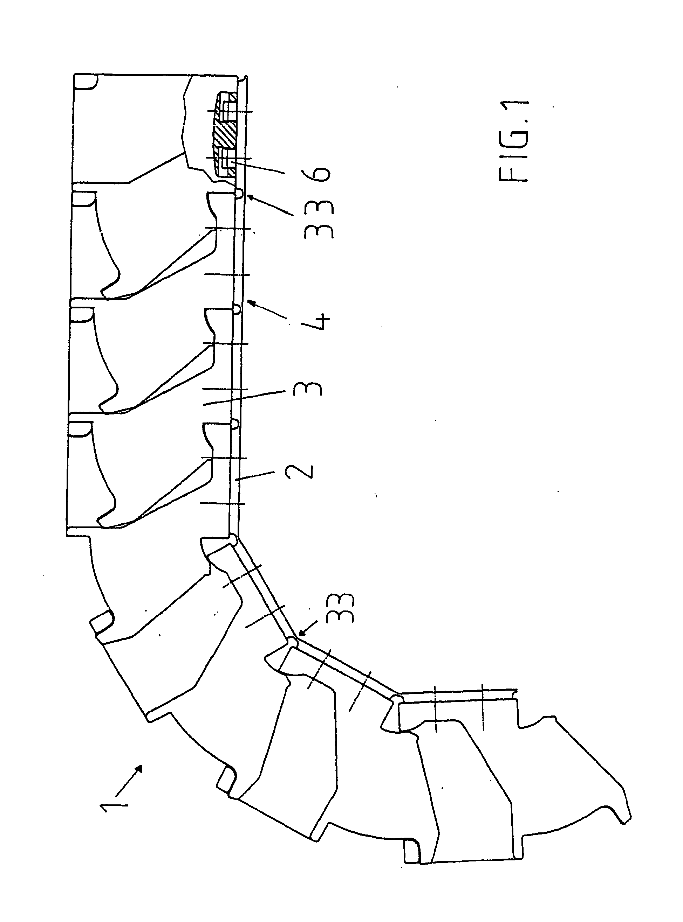

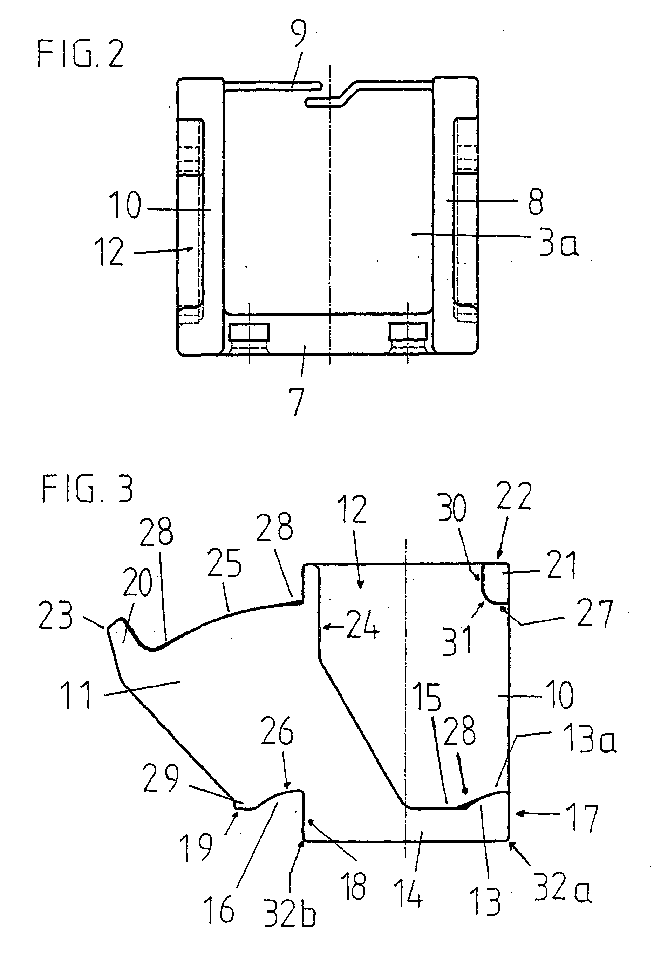

Fig. 1 zeigt eine gattungsgemässe Leitungsführungseinrichtung gemäss der DE 198 60 948. Die in Fig. 1 gezeigte Leitungsführungseinrichtung 1 weist ein flaches Gleitband 2 mit auf diesem festgelegten Führungsgliedern 3,auf, die einen Führungskanal 3a (siehe Fig. 2) einschließen. Die Unterseite 4 des Gleitbandes 2 dient hierbei als Gleitfläche, wenn das Obertrum der Leitungsführungseinrichtung auf dem Untertrum gleitend geführt ist. Die Oberseite des Gleitbandes ist mit noppenförmigen Formschlußmitteln 6 zur Befestigung der Führungsglieder 3 versehen.

Gemäss Figur 2 weisen die Führungsglieder 3, die einstückig oder auch mehrteilig ausgeführt sein können, ein stegartiges Bodenteil 7 und an diesem befestigte, gegebenenfalls einstückig angeformte Seitenteile 8 auf. Die Bodenteile 7 und die Seitenteile 8 können gegebenenfalls auch als separate Bauteile ausgeführt sein. An den Seitenteilen 8 ist ferner zur Begrenzung des Führungskanals 3a ein Quersteg 9 vorgesehen, der nach dem Ausführungsbeispiel zweiteilig ausgeführt ist, um das Einführen der in dem Führungskanal 3a zu führenden Leitungen zu erleichtern.

Zur weiteren Ausgestaltung der Leitungsführungseinrichtung sei hier vollumfänglich auf die DE 198 60 948 verwiesen, deren Offenbarungsgehalt hiermit bezüglich der Ausgestaltung der Führungsglieder als auch des Gleitbandes sowie der Befestigung der Führungsglieder an dem Gleitband mitumfasst sei..

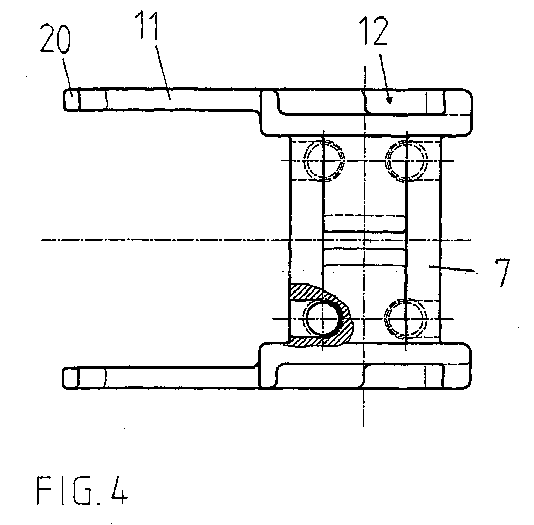

Das einstückige Führungsglied nach den Figuren 2 bis 4, das als Kunstoffformteil ausgeführt und im Spritzgußverfahren hergestellt werden kann, weist Seitenteile 8 mit einem, bezogen auf das Führungskanalinnere, zurückspringenden Bereich 10 mit einer im wesentlichen rechteckigen Form auf, der zusammen mit dem Bodenteil 7 ein U-förmiges Führungsglied bildet. Der angeformte, axial vorspringende Bereich 11 hat in etwa die Form eines Kreissektors und kann bei der zusammengesetzten Leitungsführungseinrichtung von der dem zurückspringenden Bereich 10 vorgelagerten Ausnehmung 12 des benachbarten Führungsgliedes aufgenommen werden. Die vorspringenden Bereiche 11 umgeben hierbei seitlich die zurückspringenden Bereiche 10.

Im unteren Bereich der Seitenteile, angrenzend an die vertikale Stirnfläche der Seitenteile 8, ist ein lateral vorstehender kreissektorförmiger Vorsprung 13 angeformt, dessen Kreisbogenfläche 13a nach oben weist, d. h. dem Gleitband abgewandt ist und sich parallel zur Außenfläche der Seitenteile erstreckt. Der Vorsprung 13 geht an seinem Ende geringerer Höhe.in einen Verbindungssteg 14 mit horizontaler Oberseite über, der in den vorspringenden Bereich 11 mündet. Das Zentrum des kreissektorförmigen Vorsprunges befindet sich in der Nähe oder exakt auf Höhe der neutralen Faser des Gleitbandes bzw. dessen Unterkante und in etwa oder exakt auf Höhe der dem vorspringenden Bereich 11 abgewandten Stirnseite des Seitenteils 8. Der Bogenumfang des Vorsprungs entspricht dem maximalen Verschwenkwinkel der Führungsglieder. Sollte dieser vergleichsweise klein sein, so dass ein den Vorsprung hintergreifendes Element des benachbarten Gliedes unter Zugkräften über den Vorsprung rutscht, so kann eine steiler gestellte Anlagefläche vorgesehen sein. Der Vorsprung 13 läuft in einen Steg 14 mit einer im wesentlichen horizontal bzw. parallel zur Längsrichtung des Gleitbandes verlaufenden Oberseite 15 aus, die gegebenenfalls auch geneigt zur Gleitbandebene verlaufen kann. Der Vorsprung 13 wird von dem benachbarten Führungsglied von einer ebenfalls kreissektorförmigen Ausnehmung 16 des im montierten Zustand der Leitungsführungseinrichtung mit dem erstgenannten Führungsglied überlappenden Bereichs 11 aufgenommen, deren Kreisbogenumfang der des Vorsprungs 13 entspricht. Der Vorsprung 13 kann auch das benachbarte Führungsglied geringfügig überlappen. Nach dem Ausführungsbeispiel verläuft die senkrecht zur Gleitbandebene verlaufende Begrenzung 18 der Ausnehmung 16 fluchtend zur Stirnseite 17 des Führungsgliedes und liegt bei gestreckter Anordnung der Leitungsführungseinrichtung an der der Stirnseite zugewandten Begrenzungsfläche des Vorsprungs 13 an. Gegebenenfalls kann sie zu dieser auch ein geringes Spiel aufweisen. Das Zentrum der kreissektorförmigen Ausnehmung 16 liegt wie das des Vorsprungs 13 auf Höhe der Stirnseite 17 und der neutralen Faser des Gleitbandes bzw. dessen Unterkante.

Der Radius der Ausnehmung 16 übersteigt den des Vorsprungs 13 nur geringfügig, um eine reibungsarme, ansonsten aber spielfreie Verschwenkbewegung derselben zu gewährleisten.

Die Ausnehmung 16 wird seitlich durch einen an einem nasenförmigen Vorsprung 29 angeordneten Bereich 19 fortgesetzt, der an die Kontur der Oberseite 15 des Steges 14 angepasst ist und bei geradliniger Anordnung der Leitungsführungseinrichtung mit der Oberseite 15 ein korrespondierendes Anschlagpaar bildet. Hierzu sind die Stegoberseite 15 und der Bereich 19 eben ausgeführt und verlaufen bei gestreckter Leitungsführungseinrichtung parallel zur Hauptebene des Gleitbandes 2.

An dem axial vorspringenden und das benachbarte Führungsglied umgreifenden Bereich 11 ist an der der Stirnseite 17 gegenüberliegenden Seite ein hakenförmiger Vorsprung 20 vorgesehen , der derart angeordnet ist, dass er einen an dem Seitenteil 8 des benachbarten Führungsgliedes angeordneten lateral vorspringenden Vorsprung 21 hintergreift. Der Vorsprung 21 schließt hier mit der Oberkante 22 des Seitenteils 8 und der dem Vorsprung 13 zugeordneten Stirnseite ab, er kann gegebenenfalls jedoch von diesen beabstandet sein. Durch Angriff des hakenförmigen Vorsprungs 20 an dem Vorsprung 21 wird die maximale Verschwenkbewegung benachbarter Führungsglieder im Umlenkbereich der Leitungsführungseinrichtung begrenzt. Die radiale Ausdehnung des Vorsprunges 13 und der Ausnehmung 16 sind hierbei derart bemessen, dass bei maximaler Abwinkelungsstellung benachbarter Führungsglieder noch Teilbereiche derselben einander gegenüberliegen, und ferner ist die Formgebung von Ober- und Unterkante 25, 26 des seitlich mit dem benachbarten Führungsglied überlappenden Bereichs 11, der während der Verschwenkbewegung der Führungsglieder zwischen zwei beidseitigen Vorsprüngen, hier den Vorsprüngen 13 und 21, geführt wird, derart bemessen, dass über einen Teil der Verschwenkbewegung, vorzugsweise über die gesamte, eine Höhenbewegung benachbarter Führungsglieder relativ zueinander eingeschränkt ist, vorzugsweise auf ein solches Maß, das für eine reibungsarme Abwinkelungsbewegung der Führungsglieder noch notwendig ist.

Außerdem ist zur Begrenzung des Schwenkwinkels bei gestreckter Leitungsführungseinrichtung ein weiteres Anschlagpaar vorgesehen, welches zur dem Drehachse der Verschwenkbewegung einen möglichst großen Abstand einnimmt. Zusammen mit dem durch die Stegoberseite 15 und dem Bereich 19 gebildeten Anschlagpaar liegen somit zwei Anschlagpaare vor, die einen deutlich unterschiedlichen radialen Abstand zur Drehachse der Verschwenkbewegung der Führungsglieder aufweisen. Hierbei wird das mit geringerer Drehgeschwindigkeit aufeinandertreffende Anschlagpaar zeitlich vor dem mit größerer Drehgeschwindigkeit zum Einsatz kommenden Anschlagpaar betätigt, so dass eine besonders hohe Geräuschdämpfung bewirkt wird. Nach dem Ausführungsbeispiel dient als weiterer Anschlag mit maximalen Abstand zur Drehachse der Führungsglieder die axial vorstehende Kante 23 des Vorsprunges 20, die an der die Ausnehmung 12 begrenzenden Kante im Bereich 24 zur Anlage kommt, die nach dem Ausführungsbeispiel im wesentlichen senkrecht zur Gleitbandebene verläuft. Gegebenenfalls kann hier anstelle des im wesentlichen punktförmigen Anschlages auch ein flächiger Anschlag vorgesehen sein. Ferner können alternativ oder zusätzlich auch Bereiche der Stirnseiten der Führungsglieder als Anschlagflächen ausgebildet sein wie z. B. die Stirnseiten im Bereich der Vorsprünge 13, 21 sowie die gegenüberliegenden Stirnseitenbereiche des benachbarten Führungsgliedes.

Um eine sehr ruhige und geräuscharme Fahrbewegung der Leitungsführungseinrichtung zu ermöglichen, können an benachbarten Führungsgliedern alternativ oder zusätzlich zu dem doppelten Anschlagpaar Bereiche vorgesehen sein, die jeweils im letzten Winkelbereich der Verschwenkbewegung aufeinander auflaufen. Derartige aufeinander auflaufende Bereiche benachbarter Führungsglieder weisen einander zugewandte Oberflächen mit vorzugsweise nicht kreisförmigen Konturen.auf, die bei einem vorbestimmten Verschwenkwinkel miteinander zur Anlage kommen und bei fortschreitender Verschwenkbewegung einer zunehmende Verpressung der Führungsglieder unter radial wirkenden Verpressungskräften bewirken. Die zunehmende Flächenpressung der aufeinander auflaufenden Bereiche kann durch plastische Deformation der Bereiche und/oder durch ein einen entsprechenden Versatz der Führungsglieder bzw. entsprechender Bauteile zueinander ermöglichendes Spiel teilweise oder vollständig aufgefangen werden. Hierdurch wirken die Auflaufbereiche in der Art von Bremseinrichtungen, die dem jeweils zugeordneten Anschlag vorgelagert sind. Die maximale Flächenpressung ist dabei derart eingestellt, dass sie durch die beim bestimmungsgemäßen Betrieb auf die Leitungsführungseinrichtung ausgeübten Kräfte ohne weiteres überwunden werden können, so dass die Bremse sich nicht festsetzt und die Führungsglieder ohne weiteren Eingriff bei der Umlenkung der Leitungsführungseinrichtung gegeneinander verschwenkbar sind. Hierzu können die auflaufenden Bereiche an benachbarten Führungsgliedern in Form von einander gegenüberliegenden, geringfügig beabstandeten kreisbogenförmigen Flächen vorgesehen sein, die konzentrisch zur Verschwenkachse 33 (Fig. 1) der Führungsglieder angeordnet sind, wobei die Auflaufschrägen an dem radial innenliegenden Kreisbogen als Bereich mit einem größeren Krümmungsradius, z. B. als Tangenten, fortgesetzt sind, die sich radial bis über den größeren Kreisbogen hinaus erstrecken.

Nach dem Ausführungsbeispiel sind Auflaufschrägen 28 in Form von tangentialen Bereichen an dem der Stirnseite abgewandten Ende der kreissektorförmigen Vorsprünge 13 vorgesehen, die mit dem nasenförmigen Vorsprung 29 wechselwirken als auch tangentiale Auflaufschrägen an der kreisbogenförmigen Oberkante 25 des Seitenteils 8, die mit dem Auflaufbereich 27 des Vorsprungs 21 wechselwirken.

Zur Montage der Leitungsführungseinrichtung kann zunächst eine Reihe von Führungsgliedern aneinander vormontiert werden, wobei die Zugkraft übertragenden Mittel insbesondere bei gestreckter Anordnung sowie bei geringer Abwinkelung der Führungsglieder wirksam sind, so dass ein handhabbarer Strang von Führungsgliedern aufgebaut werden kann, der auf dem Gleit- bzw. Führungsband befestigt ist.

Zur Befestigung zweier Führungsglieder aneinander werden die vorspringenden Bereiche 11 in die Ausnehmungen 12 des benachbarten Führungsgliedes unter seitlichem Umgreifen des Seitenteils 8 gebracht. Hierzu wird vorteilhafterweise der hakenförmige Vorsprung 20 mit der inneren Anschlagfläche 30 des Vorsprunges 21 des korrespondierenden Führungsgliedes zur Anlage gebracht, indem der Vorsprung 20 in die Ausnehmung 12 eingefädelt wird. Anschließend erfolgt eine Verschwenkbewegung um die der Stirnseite abgewandte Unterkante 31 des Vorsprungs 21, die hierzu entsprechend abgerundet ist, bis der vorspringende Bereich 11 in die Ausnehmung 12 eingeschwenkt ist und die gegenüberliegenden Unterkanten 32 a,b der benachbarten Führungsglieder miteinander zur Anlage kommen. Diese Stellung entspricht der maximalen Verschwenkstellung der Führungsglieder bei der bestimmungsgemäßen Verfahrung der Leitungsführungseinrichtung. Anschließend kann durch Verschwenken der Führungsglieder um die durch die Vorsprünge 13 definierte Führung das jeweilige Paar von Führungsgliedern in eine gestreckte Anordnung überführt werden. Das Spiel zwischen der bogenförmigen Begrenzung der Ausnehmung 16 und.der bogenförmigen Oberseite des Vorsprungs 13 sowie die Winkelerstreckung von.Vorsprung 13 und Ausnehmung 16 sind somit derart bemessen, dass die Nase.29 bei einer Drehbewegung um die Unterkante 31 über den Vorsprung 13 frei oder unter Überwindung geringer Haltekräfte greifen kann, so dass die Führungsglieder voneinander lösbar sind.

Die Formschlußmittel 13, 16 sind somit derart ausgebildet, dass sie durch eine Verschwenk- und/oder translatorische Bewegung der Führungsglieder innerhalb der Verschwenkebene zum Ein- und Ausgriff gebracht werden können. Irgendwie geartete Rastverbindungen sind hierbei nicht erforderlich, sie können gegebenenfalls jedoch zusätzlich vorhanden sein, insbesondere dann, wenn die Rastverbindungen ebenfalls durch Bewegung der Führungsglieder in der Verschwenkebene zum Eingriff bzw. Ausgriff bringbar sind. Insbesondere können sich die Rastmittel entlang der Verschwenkebene erstrecken, so dass auch die Einrastbewegung in der Verschwenkebene erfolgt.

Fig. 3 zeigt eine Draufsicht auf ein einteiliges Führungsglied nach Fig.2. Aus der Draufsicht geht zusätzlich hervor, dass die vertikal verlaufenden und der Stirnseite abgewandten Anschlagflächen des Vorsprungs 21 schräg um einige Grad, z. B. ca. 4 Grad, nach innen gestellt sind, so dass ein seitliches Wegspringen der Anschläge beim Aufeinandertreffen derselben verhindert wird.

### Leitungsführungseinrichtung

### Bezugszeichenliste

- 1: Leitungsführungseinrichtung
- 2: Gleitband
- 3: Führungsglied
- 3a: Führungskanal
- 4: Unterseite
- 6: Formschlußmittel
- 7: Bodenteil
- 8: Seitenteil
- 9: Quersteg
- 10: zurückspringender Bereich
- 11: vorspringender Bereich
- 12: Ausnehmung
- 13: Vorsprung
- 13a: Kreisbogenfläche
- 14: Steg
- 15: Oberseite
- 16: Ausnehmung
- 17: Stirnseite
- 18: Begrenzung
- 19: Bereich
- 20: Vorsprung
- 21: Vorsprung
- 22: Oberseite
- 23: Kante
- 24: Anschlagbereich
- 25: Oberkante
- 26: Unterkante
- 27: Auflaufbereich
- 28: Auflaufschräge
- 29: Vorsprung
- 30: Anschlagfläche
- 31: Unterkante
- 32a, b: Unterkante
- 33: Verschwenkachse

## Patentansprüche

1. Leitungsführungseinrichtung zum Führen von Leitungen oder Kabeln mit einer Vielzahl von zueinander verschwenkbaren Führungsgliedern, die Seitenteile zur Bildung eines Führungskanals unter Einschränkung der Bewegung der geführten Leitungen quer zu Leitungsführungseinrichtung aufweisen, wobei die Leitungsführungseinrichtung unter Bildung eines Untertrums, eines Umlenkbereichs und eines oberhalb des Untertrums geführten Obertrums ablegbar ist, die Verschwenkachse der Führungsglieder zueinander jeweils außerhalb der halben Höhe der Führungsglieder in der dem jeweils gegenüberliegenden Trum zugewandten Hälfte der Führungsglieder angeordnet ist und wobei die Führungsglieder einen seitlich überlappenden Bereich (11) mit einer Oberkante (25) und einer Unterkante (26) und zwei Vorsprünge (21, 13) aufweisen, die in im wesentlichen gestreckter Lage unmittelbar benachbarter Führungsglieder bei Zugbelastung als Zugkraft aufnehmende Mittel wirken, indem die Unterkante (26) eines Führungsglieds auf den Vorsprung (13) des benachbarten Führungsglieds aufgleitet und dabei der seitlich überlappende Bereich (11) zwischen der Oberkante (25) und der Unterkante (26) unter Einschränkung einer relativen Höhenbewegung der Führungsglieder eine reversible Verkeilung zwischen den Vorsprüngen (21, 13) erfährt.

2. Leitungsführungseinrichtung nach Anspruch 1, **dadurch gekennzeichnet, dass** die Vorsprünge (21, 13) bei der Schwenkbewegung als Führungsmittel wirken, indem die Formgebung von Ober- und Unterkante (25 bzw. 26) zwischen den beiden Vorsprüngen (21, 13) derart bemessen ist, dass zumindest über einen Teil der Verschwenkbewegung eine relative Höhenbewegung der Führungsglieder zueinander soweit eingeschränkt ist, wie sie für eine reibungsarme Schwenkbewegung der Führungsglieder noch notwendig ist.

3. Leitungsführungseinrichtung nach Anspruch 1 oder 2, **dadurch gekennzeichnet, dass** der seitlich überlappende Bereich (11) als seitlich vorspringender Bereich gegenüber einem seitlich zurückspringenden Bereich (10) ausgebildet ist, der von den seitlich überlappenden Bereich (11) des benachbarten Führungsglieds aufnehmbar ist und in dem die Vorsprünge (21, 13) seitlich vorstehen.

4. Leitungsführungseinrichtung nach einem der Ansprüche 1 bis 3, **dadurch gekennzeichnet, dass** die die Ober- und Unterkante (25 bzw. 26) kreisbogenförmig in Richtung der Verschwenkbewegung des benachbarten Führungsglieds ausgebildet sind.

5. Leitungsführungseinrichtung nach Anspruch 4, **dadurch gekennzeichnet, dass** die Unterkante (26) des überlappenden Bereichs (11) durch eine kreissektorförmige Ausnehmung (16) gebildet ist, in die der mit der Unterseite (26) zusammenwirkende Vorsprung (13) mit einer der Kreisbogenfläche der Unterkante (26) entsprechenden Kreisbogenfläche (13a) eingreift.

6. Leitungsführungseinrichtung nach Anspruch 5, **dadurch gekennzeichnet, dass** das Zentrum der Kreisbogenfläche der Unterkante (26) und das Zentrum der Kreisbogenfläche (13a) des Vorsprungs (13) an dem gegenüberliegenden Trum zugewandten Unterkante des Führungsglieds angeordnet sind.

7. Leitungsführungseinrichtung nach Anspruch 6, **dadurch gekennzeichnet, dass** der Zentrum des Kreisbogenfläche (13a) des Vorsprungs (13) außerdem auf Höhe der von der Ausnehmung (16) abgewandten Stirnseite (17) des Führungsglieds und somit im Eckpunkt der Unterseite und der Stirnseite (17) des Führungsglieds angeordnet ist.

8. Leitungsführungseinrichtung nach einem der Ansprüche 1 bis 7, **dadurch gekennzeichnet, dass** zum Lösen benachbarter Führungsglieder die Vorsprünge (21, 13) von der Ober- und Unterkante (25 bzw.26) durch eine bestimmte relative Schwenk- und translatorische Bewegung entfernbar sind.

9. Leitungsführungseinrichtung nach Anspruch 8, **dadurch gekennzeichnet, dass** zum Lösen benachbarter Führungsglieder die Führungsglieder um ihre gemeinsame Verschwenkachse in die maximale Verschwenkstellung positionierbar und dann um den mit der Oberkante (25) des überlappenden Bereichs (11) zusammenwirkenden Vorsprung (21) aus ihrem Eingriff heraus schwenkbar sind.

10. Leitungsführungseinrichtung nach einem der Ansprüche 1 bis 9, **dadurch gekennzeichnet, dass** in zumindest einer Verschwenkrichtung zur Begrenzung der Verschwenkwinkelrichtung benachbarter Führungsglieder zumindest zwei korrespondierende Anschlagpaare (15, 19, 23, 24, 20, 30) vorgesehen sind, die in zeitlichem Abstand voneinander zur Anlage kommen.

11. Leitungsführungseinrichtung nach Anspruch 10, **dadurch gekennzeichnet, dass** die Anschlagpaare so ausgebildet sind, dass bei der Verschwenkbewegung aus der maximalen Verschwenkstellung in die gestreckte Stellung benachbarter Führungsglieder zunächst ein zur Verschwenkachse (33) näherliegendes Anschlagpaar (15, 19) und.danach ein von der Verschwenkachse (33) entfernter liegendes Anschlagpaar (23, 24) zur Anlage kommen.

12. Leitungsführungseinrichtung nach einem der Ansprüche 1 bis 11, **dadurch gekennzeichnet, dass** zur Abbremsung der Verschwenkbewegung benachbarter Führungsglieder Auflaufschrägen (28) an der Oberkante (25) des überlappenden Bereichs (11) und/oder an dem mit der Unterkante (26) zusammenwirkenden Vorsprung (13) und auf diese auflaufende Bereiche (27) des mit der Oberkante (25) des überlappenden Bereichs (11) eines benachbarten Führungsglieds zusammenwirkenden Vorsprungs (21) bzw. der Unterkante (26) vorgesehen sind.

13. Leitungsführungseinrichtung nach einem der Ansprüche 1 bis 12, **gekennzeichnet durch** ein eine Vielzahl von Führungsglieder miteinander verbindendes und sich in Längsrichtung der Leitungsführungseinrichtung erstreckendes Führungsband (2), an dem Führungsglieder befestigt sind.

## Claims

1. Cable guide for guiding lines or cables, with a plurality of guide links that pivot relative to one another and display side parts for forming a guide channel restricting the movement of the guided lines transversely to the cable guide, where the cable guide can be deposited, forming a lower strand, a deflection zone and an upper strand guided above the lower strand, the pivoting axis of the guide links relative to one another is located outside half the height of the guide links in the half of the guide links facing the respectively opposite strand, and where the guide links display a laterally overlapping area (11) with an upper edge (25) and a lower edge (26) and two projections (21, 13) that act as tensile force-absorbing means when tensile stress is applied to immediately adjacent guide links in essentially straight position, in that the lower edge (26) of one guide link slides onto the projection (13) of the adjacent guide link and, in this process, the laterally overlapping area (11) between the upper edge (25) and the lower edge (26) undergoes reversible wedging between the projections (21, 13), restricting any relative vertical movement of the guide links.

2. Cable guide according to Claim 1, **characterised in that** the projections (21, 13) act as guide means during the pivoting movement, **in that** the form of the upper and lower edge (25 and 26) between the two projections (21, 13) is dimensioned in such a way that, at least over part of the pivoting movement, any vertical movement of the guide links relative to each other is restricted to the extent necessary for low-friction pivoting movement of the guide links.

3. Cable guide according to Claim 1 or 2, **characterised in that** the laterally overlapping area (11) is designed as a laterally projecting area vis-à-vis a laterally receding area (10), which can be received by the laterally overlapping area (11) of the adjacent guide link and in which the projections (21, 13) protrude laterally.

4. Cable guide according to one of Claims 1 to 3, **characterised in that** the upper and lower edge (25 and 26) are designed in the shape of an arc in the direction of the pivoting movement of the adjacent guide link.

5. Cable guide according to Claim 4, **characterised in that** the lower edge (26) of the overlapping area (11) is formed by a sector-shaped recess (16), which is engaged by the projection (13) interacting with the lower side (26) by means of an arc-shaped surface (13a) that corresponds to the arc-shaped surface of the lower edge (26).

6. Cable guide according to Claim 5, **characterised in that** the centre of the arc-shaped surface of the lower edge (26) and the centre of the arc-shaped surface (13a) of the projection (13) are located on the lower edge of the guide link facing the opposite strand.

7. Cable guide according to Claim 6, **characterised in that** the centre of the arc-shaped surface (13a) of the projection (13) is moreover located at the level of the face end (17) of the guide link facing away from the recess (16) and thus at the corner point of the lower side and the face end (17) of the guide link.

8. Cable guide according to one of Claims 1 to 7, **characterised in that**, to disconnect adjacent guide links, the projections (21, 13) can be removed from the upper and lower edge (25 and 26) by means of a certain relative pivoting and translatory movement.

9. Cable guide according to Claim 8, **characterised in that**, to disconnect adjacent guide links, the guide links can be positioned in their maximally pivoted position about their common pivoting axis and then pivoted out of their engaged position about the projection (21) interacting with the upper edge (25) of the overlapping area (11).

10. Cable guide according to one of Claims 1 to 9, **characterised in that** at least two corresponding pairs of stops (15, 19, 23, 24, 20, 30) that come into contact one after the other are provided in at least one pivoting direction to restrict the pivoting angle of adjacent guide links.

11. Cable guide according to Claim 10, **characterised in that** the pairs of stops are designed in such a way that, during pivoting movement out of the maximally pivoted position into the straight position of adjacent guide links, a pair of stops (15, 19) located nearer to the pivoting axis (33) comes into contact first, and then a pair of stops (23, 24) located farther away from the pivoting axis (33).

12. Cable guide according to one of Claims 1 to 11, **characterised in that**, in order to brake the pivoting movement of adjacent guide links, run-up surfaces (28) are provided on the upper edge (25) of the overlapping area (11) and/or on the projection (13) interacting with the lower edge (26), and areas (27) running up on them are provided on the projection (21) interacting with the upper edge (25) of the overlapping area (11) of an adjacent guide link or on the lower edge (26).

13. Cable guide according to one of Claims 1 to 12, **characterised by** a guide strip (2) that connects a plurality of guide links to each other, extends in the longitudinal direction of the cable guide and on which guide links are mounted.

## Revendications

1. Dispositif de guidage de conduites destiné à guider des conduites ou des câbles, comprenant un grand nombre d'organes de guidage qui présentent des parties latérales pour former un canal de guidage en limitant le mouvement des conduites guidées, transversalement au dispositif de guidage de conduites, le dispositif de guidage de conduites pouvant se placer de manière à former un brin inférieur, une zone de renvoi ou de courbure et un brin supérieur guidé au-dessus du brin inférieur, et l'axe de pivotement des organes de guidage les uns par rapport aux autres étant agencé respectivement en-dehors de la zone de hauteur médiane des organes de guidage, dans la moitié des organes de guidage dirigée vers le brin respectivement opposé, et les organes de guidage présentant une zone (11) de chevauchement latéral avec un bord supérieur (25) et un bord inférieur (26) et deux protubérances (21, 13) qui, dans une position sensiblement étendue d'organes de guidage directement voisins, en cas de sollicitation en traction, agissent en tant que moyens absorbant la force de traction, par le fait que le bord inférieur (26) d'un organe de guidage glisse par-dessus la protubérance (13) de l'organe de guidage voisin, et que la zone de chevauchement latéral (11) est soumise à cette occasion, entre le bord supérieur (25) et le bord inférieur (26), en limitant un mouvement relatif en hauteur, à un coincement réversible entre les protubérances (21, 13).

2. Dispositif de guidage de conduites selon la revendication 1, **caractérisé en ce que** lors du mouvement de pivotement, les protubérances (21, 13) agissent en tant que moyens de guidage grâce au fait que la forme donnée au bord supérieur et au bord inférieur (25 respectivement 26) entre les deux protubérances (21, 13) est dimensionnée de manière telle, que sur au moins une partie du mouvement de pivotement, un mouvement relatif en hauteur des organes de guidage les uns par rapport aux autres, soit limité juste à celui nécessaire à un mouvement de pivotement à faible frottement des organes de guidage.

3. Dispositif de guidage de conduites selon la revendication 1 ou 2, **caractérisé en ce que** la zone (11) de chevauchement latéral est réalisée en tant que zone en saillie latérale par rapport à une zone (10) en retrait latéral, qui peut être reçue par la zone (11) de chevauchement latéral de l'organe de guidage voisin, et dans laquelle font saillie latéralement les protubérances (21, 13).

4. Dispositif de guidage de conduites selon l'une des revendications 1 à 3, **caractérisé en ce que** le bord supérieur et le bord inférieur (25 respectivement 26) sont réalisés selon une forme d'arc de cercle dans la direction du mouvement de pivotement de l'organe de guidage voisin.

5. Dispositif de guidage de conduites selon la revendication 4, **caractérisé en ce que** le bord inférieur (26) de la zone (11) de chevauchement est formé par un évidement (16) en forme de secteur circulaire dans lequel vient s'engager la protubérance (13) coopérant avec le bord inférieur (26), avec une surface en arc de cercle (13a) correspondant à une surface en arc de cercle du bord inférieur (26).

6. Dispositif de guidage de conduites selon la revendication 5, **caractérisé en ce que** le centre de la surface en arc de cercle du bord inférieur (26) et le centre de la surface en arc de cercle (13a) de la protubérance (13) sont agencés sur le bord inférieur de l'organe de guidage, qui est dirigé vers le brin opposé.

7. Dispositif de guidage de conduites selon la revendication 6, **caractérisé en ce que** le centre de la surface en arc de cercle (13a) de la protubérance (13) est en outre agencé à hauteur du côté frontal (17) de l'organe de guidage, qui est opposé à celui où se trouve l'évidement (16), et se situe ainsi sur le sommet de coin formé par le côté inférieur et le côté frontal (17) de l'organe de guidage.

8. Dispositif de guidage de conduites selon l'une des revendications 1 à 7, **caractérisé en ce que** pour désolidariser des organes de guidage voisins, les protubérances (21, 13) peuvent être retirées du bord supérieur et du bord inférieur (25 respectivement 26) par un mouvement relatif déterminé de pivotement et de translation.

9. Dispositif de guidage de conduites selon la revendication 8, **caractérisé en ce que** pour désolidariser des organes de guidage voisins, les organes de guidage peuvent être positionnés dans la position de pivotement maximale autour de leur axe de pivotement commun, puis peuvent être pivotés hors de leur prise réciproque autour de la protubérance (21) coopérant avec le bord supérieur (25) de la zone (11) de chevauchement.

10. Dispositif de guidage de conduites selon l'une des revendications 1 à 9, **caractérisé en ce que** dans au moins une direction de pivotement, pour limiter la direction angulaire de pivotement d'organes de guidage voisins, sont prévues au moins deux paires de butées (15, 19, 23, 24, 20, 30) correspondantes, qui viennent en butée de manière espacée dans le temps.

11. Dispositif de guidage de conduites selon la revendication 10, **caractérisé en ce que** lors du mouvement de pivotement de la position de pivotement maximale vers la position étendue d'organes de guidage voisins, c'est tout d'abord une paire de butées (15, 19) située plus près de l'axe de pivotement (33), puis ensuite une paire de butées (23, 24) plus éloignée de l'axe de pivotement (33), qui viennent se mettre en appui réciproque.

12. Dispositif de guidage de conduites selon l'une des revendications 1 à 11, **caractérisé en ce que** pour freiner le mouvement de pivotement d'organes de guidage voisins, sur le bord supérieur (25) de la zone (11) de chevauchement et/ou sur la protubérance (13) coopérant avec le bord inférieur (26) sont prévues des rampes d'entrée (28) et, venant s'appliquer sur celles-ci, des zones (27) de la protubérance (21) coopérant avec le bord supérieur (25) de la zone (11) de chevauchement d'un organe de guidage voisin, et respectivement du bord inférieur (26).

13. Dispositif de guidage de conduites selon l'une des revendications 1 à 12, **caractérisé par** une bande de guidage (2) qui relie entre eux un grand nombre d'organes de guidage, et s'étend dans la direction longitudinale du dispositif de guidage de conduites, et sur laquelle sont fixés des organes de guidage.
